Europäisches Patentamt

(19) European Patent Office

Office européen des brevets

(11) Numéro de publication : **0 437 996 A1**

# (12) DEMANDE DE BREVET EUROPEEN

(21) Numéro de dépôt : 90403612.6

(22) Date de dépôt : 14.12.90

(51) Int. Cl.⁵ : **C01B 33/20**, C01B 33/26

(30) Priorité : 18.12.89 FR 8916710

(43) Date de publication de la demande :
24.07.91 Bulletin 91/30

(84) Etats contractants désignés :
AT BE CH DE DK ES FR GB IT LI LU NL SE

(71) Demandeur : SOCIETE FRANCAISE HOECHST
TOUR ROUSSEL HOECHST 1 Terrasse Bellini
F-92800 Puteaux (FR)

(72) Inventeur : **Rouet, Patrice**
**10, rue de la Pierre Sautée**
**F-60350 Trosly Brueil (FR)**
Inventeur : **Syoen, Florence**
**3, rue d'Harissard, Welles-Perennes**
**F-60420 Maignelay-Montigny (FR)**

(74) Mandataire : **Rinuy, Santarelli**
**14, avenue de la Grande Armée**
**F-75017 Paris (FR)**

(54) **Procédé d'obtention d'oxydes métalliques réfractaires à base de silice par voie sol-gel en milieu aqueux.**

(57)    Procédé d'obtention par voie sol-gel d'oxydes métalliques réfractaires à base de silice dans lequel l'on prépare, en milieu aqueux, à une, température inférieure à 60°C, un gel monolithe en abandonnant un sol aqueux obtenu par simple mélange en quantités stoechiométriques d'un sol aqueux d'acide silicique et d'une ou plusieurs solutions aqueuses d'un sel hydrosoluble du ou des autres métaux constitutifs de ces oxydes puis l'on calcine a une température inférieure à 1000°C le gel monolithe obtenu après qu'il a été séché à une température inférieure à 150°C.

EP 0 437 996 A1

## PROCEDE D'OBTENTION D'OXYDES METALLIQUES REFRACTAIRES A BASE DE SILICE PAR VOIE SOL-GEL EN MILIEU AQUEUX

La présente invention concerne un procédé d'obtention d'oxydes métalliques réfractaires à base de silice par voie sol-gel en milieu aqueux.

Les céramiques et notamment les oxydes métalliques réfractaires à base de silice, comme la mullite, la cordiérite ou le zircon connaissent un développement important dans des domaines variés tels que l'industrie automobile, la fonderie de précision, la catalyse, l'électronique.

Les oxydes métalliques réfractaires sont couramment obtenus par voie sèche, par simple chauffage, en atmosphère contrôlée, à hautes températures, généralement à des températures supérieures à 1000°C, du mélange dans des proportions convenables de leurs constituants habituellement à l'état d'oxyde. Pour certains oxydes métalliques réfractaires particuliers, on a recours à un procédé par voie sol-gel en milieu organique. Toutefois, même après calcination soigneuse, les produits issus de ce procédé contiennent des traces de produits carbonés qui les rendent inutilisables dans certaines applications de pointe comme l'électronique ou la catalyse (demande de brevet européen N° 237 253, demande de brevet français N° 2 598 143).

Afin d'obvier à ces inconvénients d'une part, et de disposer d'un procédé énergétiquement économique, d'autre part, la Demanderesse a découvert un nouveau procédé d'obtention d'oxydes métalliques réfractaires à base de silice par voie sol-gel. Ce procédé est caractérisé en ce que l'on prépare, en milieu aqueux, à une température inférieure a 60°C, un gel monolithe en abandonnant un sol aqueux obtenu par simple mélange en quantités stoechiométriques d'un sol aqueux d'acide silicique et d'une ou plusieurs solutions aqueuses d'un sel hydrosoluble du ou des autres métaux constitutifs de ces oxydes puis que l'on calcine à une température inférieure à 1000°C le gel monolithe obtenu après qu'il a été séché à une température inférieure à 150°C.

On désigne par sol aqueux d'acide silicique, les sols acides de silice tels qu'ils peuvent être obtenus par exemple, par passage d'une solution aqueuse d'un silicate de métal alcalin sur un lit de résines échangeuses de cations sous forme acide (comme décrit, par exemple par R.K. Iler dans The Colloid Chemistry of Silica and Silicates, pages 93-95, Cornell University Press, New York, 1955).

Les sels hydrosolubles métalliques sont avantageusement des sels métalliques de l'acide nitrique tels que le nitrate d'aluminium, le nitrate de magnésium, le nitrate de zirconyle. Ces sels hydrosolubles sont utilisés sous forme de solutions aqueuses.

Selon le procédé de la présente invention, on mélange à une température inférieure a 60°C, avantageusement à la température ambiante, des quantités stoechiométriques de silice sous forme d'un sol aqueux acide de silice et des autres constituants de ces oxydes réfractaires en solution aqueuse à l'état de sels hydrosolubles, puis on abandonne au repos la suspension aqueuse colloïdale obtenue à une température inférieure à 60°C jusqu'à obtention d'un gel monolithe, ce qui nécessite environ deux à quatre heures. Ce gel monolithe est ensuite séché à une température inférieure à 150°C de manière a éliminer la majeure partie de l'eau présente et de l'acide formé et enfin il est calciné à une température inférieure à 1000°C.

Les exemples suivants illustrent la présente invention sans toutefois la limiter.

### Exemples

On prépare une solution aqueuse de nitrate d'aluminium, désignée A, en dissolvant 375,13 g (1 mole) de nitrate d'aluminium cristallisé avec 9 molécules d'eau dans 624,87 g d'eau. Cette solution contient 1 mmole de nitrate d'aluminium par gramme.

On prépare une solution aqueuse de nitrate de magnésium, désignée B, en dissolvant 512,8 g (2 moles) de nitrate de magnésium cristallisé avec 6 molécules d'eau dans 487,2 g d'eau. Cette solution contient 2 mmoles de nitrate de magnésium par gramme.

On prépare une solution aqueuse de nitrate de zirconium, désignée C, en dissolvant 267,26 g (1 mole) de nitrate de zirconyle cristallisé avec 2 molécules d'eau dans 732,74 g d'eau. Cette solution C contient 1 mmole de zircon par gramme.

On prépare un aquasol à 6% en poids de silice par passage d'une solution aqueuse de silicate de sodium sur un lit de résine échangeuse de cations sous forme acide selon un procédé similaire à celui décrit par Bird dans le brevet des Etats-Unis d'Amérique N° 2 244 325. Cette solution, désignée S, contient 1 mmole de silice par gramme.

### Exemple 1

**Préparation d'une phase de type mullite de composition $Al_2O_3\text{-}SiO_2$.**

On mélange à la température ambiante 200 g de la solution A et 100 g de la solution S puis le mélange réactionnel est chauffé à 50°C jusqu'à obtention d'un gel monolithique, ce qui demande environ 3 heures de chauffage. Ce gel est ensuite chauffé 12 heures à 140°C puis il est calciné à 990°C pendant 2 heures. On obtient ainsi 16 g (0,1 mole) d'une poudre blanche

de formule $Al_2O_3$-$SiO_2$ dont le cliché de diffraction des rayons X est identique à celui de la mullite.

## Exemple 2

**Préparation de la mullite**

On opère comme dans l'exemple 1 au départ de 300 g de la solution A et 100 g de la solution S. On obtient ainsi 21 g (50 mmoles) d'une poudre blanche de formule $_3Al_2O_3$, $_2SiO_2$ dont le cliché de diffraction des rayons X est identique à celui de la mullite.

## Exemple 3

**Préparation de la cordiérite**

On opère comme dans l'exemple 1 au départ de 80 g de la solution A, 20 g de la solution B et 100 g de la solution S. On obtient ainsi 11,6 g (20 mmoles) d'une poudre blanche de formule $_2Al_2O_3$, $_2MgO$, $_5SiO_2$ dont le cliché de diffraction des rayons X est identique à celui de la cordiérite.

## Exemple 4

**Préparation du zircon**

On opère comme dans l'exemple 1 au départ de 100 g de la solution C et de 100 g de la solution S. On obtient ainsi 18,3 g (0,1 mole) d'une poudre blanche de formule $ZrO_2$, $SiO_2$ dont le cliché de diffraction des rayons X est identique à celui du zircon.

## Revendications

Procédé d'obtention par voie sol-gel d'oxydes métalliques réfractaires à base de silice, caractérisé en ce que l'on prépare, en milieu aqueux, à une température inférieure à 60°C, un gel monolithe en abandonnant un sol aqueux obtenu par simple mélange en quantités stoechiométriques d'un sol aqueux d'acide silicique et d'une ou plusieurs solutions aqueuses d'un sel hydrosoluble du ou des autres métaux constitutifs de ces oxydes puis que l'on calcine à une température inférieure à 1000°C le gel monolithe obtenu après qu'il a été séché à une température inférieure à 150°C.

European Patent Office

## EUROPEAN SEARCH REPORT

Application Number

EP 90 40 3612

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-1 952 575 (W.R. GRACE & CO.) --- | | C 01 B 33/20 C 01 B 33/26 |
| A | CHEMICAL ABSTRACTS, vol. 110, no. 2, 9 janvier 1989, page 265, abrégé no. 12443z, Columbus, Ohio, US; & JP-A-63 166 714 (KYORITSU CERAMIC MATERIALS CO., LTD et al.) 09-07-1988 ----- | | |
| | | | **TECHNICAL FIELDS SEARCHED (Int. Cl.5)** |
| | | | C 01 B 33/00 |

The present search report has been drawn up for all claims

| Place of search | Date of completion of the search | Examiner |
|---|---|---|
| THE HAGUE | 26-03-1991 | BREBION J.CH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)